# FASCICULE DE BREVET EUROPEEN

(11) **EP 4 508 310 B1**
(45) Date de publication et mention de la délivrance du brevet: **28.01.2026**
(21) Numéro de dépôt: 23722615.4
(22) Date de dépôt: 07.04.2023
(51) Int. Cl.: F01D 5/14, F01D 9/04, F04D 29/54, F04D 29/68

(54) **PIÈCE STATORIQUE À AILETTE DANS UNE TURBOMACHINE**
STATORTEIL MIT RIPPE IN EINEM TURBINENMOTOR
STATOR PART HAVING A FIN, IN A TURBINE ENGINE

(30) Priorité: 11.04.2022 FR 2203297
(43) Date de publication de la demande: 19.02.2025
(73) Titulaire: SAFRAN, 75015 Paris (FR); Centre National de la Recherche Scientifique (CNRS), 75016 Paris (FR)
(72) Inventeur: RIERA, William Henri Joseph, 77550 MOISSY-CRAMAYEL (FR); MONDIN, Gabriel Jacques Victor, 77550 MOISSY-CRAMAYEL (FR); OTTAVY, Xavier Jean-Pierre, 92100 BOULOGNE-BILLANCOURT (FR)
(74) Mandataire: Regimbeau
(86) Numéro de dépôt international: PCT/FR2023/050506
(87) Numéro de publication internationale: WO 2023/198980

(56) Documents cités:
- WO-A1-2019/220042
- WO-A1-2021/123098
- FR-A1- 3 014 943
- US-A1- 2018 017 079

## Description

### DOMAINE DE L'INVENTION

L'invention concerne les pièces statoriques d'une turbomachine comprenant une pale comme les redresseurs de flux situés en aval d'un compresseur et en particulier les redresseurs à calage fixe.

### ETAT DE LA TECHNIQUE

Dans une turbomachine d'aéronef, et en particulier les aéronefs destinés au transport de passagers, c'est l'air propulsé par une soufflante et des gaz de combustion sortant de la turbomachine à travers une tuyère d'échappement qui exerce une poussée de réaction sur la turbomachine et, à travers elle, sur l'aéronef. La circulation des gaz à travers la turbomachine est influencée par des aubages en rotation et des aubages fixes. Les aubages fixes ou statoriques comptent notamment des aubes directrices de sortie (connu également sous le terme de « Outlet Guide Vane» ou « OGV » en anglais), les aubes directrices d'entrée (connu également sous le terme de « Inlet Guide Vane» ou « IGV » en anglais), et les aubes à calage variable (connu également sous le terme de « Variable Stator Vane» ou « VSV » en anglais). Les aubes de redresseur d'un moteur aéronautique à turbine à gaz peuvent présenter chacune deux plateformes (intérieure et extérieure) qui sont rapportées sur l'aubage. Il existe également des architectures non carénées comprenant des aubes de redresseur qui ne présentent qu'une seule plateforme intérieure. Dans tous les cas, ces aubes de redresseur forment des rangées d'aubes fixes qui permettent de guider le flux gazeux traversant le moteur selon une vitesse et un angle appropriés.

Le document US 2018/017079 A1 divulgue un compresseur à cycle variable à rotor divisé. Le rotor comprend un disque avec une âme et une jante. La jante présente une extrémité avant et une extrémité arrière. Une surface annulaire de passage d'écoulement s'étend entre les extrémités avant et arrière. Le rotor est équipé de séparateurs. Un réseau d'aubes de séparation s'étend depuis la surface de passage d'écoulement. Une aube de séparation est disposée entre chaque paire d'aubes de compresseur.

Au sein d'un redresseur de flux comprenant une pluralité de pales fixes, l'écoulement des gaz s'effectue globalement entre les pales selon un sens amont-aval. Il est connu cependant que la zone du pied de pale peut être le siège d'écoulements aérodynamiques secondaires.

Pour chaque couple de pales en regard l'une de l'autre, un gradient de pression entre la face en pression (intrados) de la première pale et la face en dépression (extrados) de la deuxième pale génère un écoulement de passage (connu également sous le terme de « crossflow » en anglais) qui transporte les gaz vers l'extrados.

En extrémité de pale, c'est-à-dire à la jonction entre l'aubage et le moyeu ou entre l'aubage et le carter, un décollement de coin (connu également sous le terme de « corner separation » en anglais) et un tourbillon (connu également sous le terme de « corner vortex » en anglais) peuvent se produire. Ce décollement génère des pertes de pression ainsi qu'un blocage aérodynamique. Ce dernier est problématique en termes d'opérabilité. Pour des incidences élevées du flux arrivant sur le redresseur, c'est-à-dire lorsque la direction d'écoulement des gaz en amont du redresseur fait un angle important avec une direction du bord d'attaque de la pale, ce décollement de coin s'amplifie jusqu'à provoquer un décrochage de la couche limite sur la pale qui ne peut plus assurer la déviation de l'écoulement.

Il y a donc un besoin pour une nouvelle géométrie permettant de corriger ces problèmes et d'améliorer les performances en termes de rendement des équipements notamment à forte incidence du flux entrant dans le redresseur.

### EXPOSE DE L'INVENTION

Un but de l'invention est de proposer une pièce statorique d'une turbomachine dont la géométrie améliore l'écoulement des fluides par rapport à l'art antérieur.

Le but est atteint dans le cadre de la présente invention grâce à une pièce statorique d'une turbomachine comprenant :
- une plateforme définissant une paroi d'une veine d'écoulement de gaz,
- une première pale,
- une deuxième pale, et
- une ailette comprenant un bord d'attaque et un bord de fuite,

l'ailette s'étendant dans la veine, radialement par rapport à un axe de la turbomachine, depuis la plateforme, en regard d'un extrados de la première pale et d'un intrados de la deuxième pale,
le bord d'attaque comprenant un point d'attaque situé sur la plateforme, une tangente au bord d'attaque au point d'attaque s'étendant dans la veine depuis la plateforme entre la première pale et un plan radial d'attaque passant par l'axe et le point d'attaque,
le bord de fuite comprenant un point de fuite situé sur la plateforme, une tangente au bord de fuite au point de fuite s'étendant dans la veine depuis la plateforme entre la deuxième pale et un plan radial de fuite passant par l'axe et le point de fuite.

Une telle pièce statorique est avantageusement et optionnellement complétée par les différentes caractéristiques suivantes prises seules ou en combinaison :
- la plateforme est une première plateforme, la pièce comprenant une deuxième plateforme de sorte à définir la veine d'écoulement entre la première plateforme et la deuxième plateforme, la veine s'étendant radialement sur une hauteur de veine, l'ailette s'étendant radialement sur une hauteur d'ailette, un rapport de la hauteur d'ailette sur la hauteur de veine étant supérieur ou égal à 0,01 et inférieur ou égal à 0,4 ;
- la première pale et la deuxième pale sont séparées angulairement dans une direction circonférentielle d'un pas angulaire, une séparation angulaire de la première pale et de l'ailette dans la direction circonférentielle étant inférieure ou égale à six dixièmes du pas angulaire ;
- la première pale comprend un bord d'attaque et un bord de fuite séparés d'une corde de pale, l'ailette comprenant une pluralité de profils empilés selon une direction radiale entre un pied d'ailette situé sur la plateforme et une tête d'ailette, chaque profil définissant une corde entre le bord d'attaque de l'ailette et le bord de fuite de l'ailette et une épaisseur maximale du profil entre un intrados de l'ailette et un extrados de l'ailette dans une direction perpendiculaire à une ligne de corde, un rapport d'une différence entre la corde du profil de tête et la corde du profil de pied sur la corde de pale étant inférieur ou égal en valeur absolue à 0,05 ; un rapport de l'épaisseur maximale du profil de pied sur la corde du profil de pied est inférieur ou égal à 0,05 ; et un rapport de l'épaisseur maximale du profil de tête sur la corde du profil de pied est inférieur ou égal à 0,05 ;
- la première pale comprend un bord d'attaque et un bord de fuite séparés d'une corde de pale, l'ailette comprenant une pluralité de profils empilés selon une direction radiale entre un pied d'ailette et une tête d'ailette, chaque profil définissant une corde d'ailette entre le bord d'attaque et le bord de fuite, un rapport de la corde du profil de pied d'ailette sur la corde de pale étant supérieur ou égale à 0,2 et inférieur ou égal à 1,1 ; un premier angle orienté étant défini depuis l'axe à une première tangente à la ligne de cambrure du profil de pied d'ailette au point d'attaque, un deuxième angle orienté étant défini depuis l'axe à une deuxième tangente à la ligne de cambrure du profil de pied de la première pale à un point référence de la ligne de cambrure du profil de pied de la première pale, le point référence présentant une position axiale du point d'attaque, une différence entre le premier angle orienté et le deuxième angle orienté étant supérieure ou égale - 50 degrés et inférieure ou égale à + 10 degrés, l'ailette définissant une coordonnée axiale d'un point à mi-corde d'un profil d'ailette, le point à mi-corde étant situé à égale distance du bord d'attaque de l'ailette et du bord de fuite de l'ailette, la coordonnée axiale étant supérieure ou égale à une position axiale du bord d'attaque de la première pale et inférieure ou égale à une somme de la position axiale du bord d'attaque de la première pale et de la corde de pale;
- la première pale comprend un bord d'attaque et un bord de fuite séparés d'une corde de pale, l'ailette comprenant une pluralité de profils empilés selon une direction radiale entre un pied d'ailette et une tête d'ailette, chaque profil définissant une ligne de cambrure et une corde entre le bord d'attaque de l'ailette et le bord de fuite de l'ailette, un rapport de la corde du profil de pied d'ailette sur la corde de pale étant supérieur ou égale à 0,1 et inférieur ou égal à 0,4 ; un angle entre une première tangente à la ligne de cambrure du profil de pied d'ailette au point d'attaque et une deuxième tangente à la ligne de cambrure du profil de pied de la première pale à un point référence de la ligne de cambrure du profil de pied de la première pale, le point référence présentant une position axiale du point d'attaque, étant inférieur ou égale en valeur absolue à 10 degrés, l'ailette définissant une coordonnée axiale d'un point à mi-corde d'un profil d'ailette, le point à mi-corde étant situé à égale distance du bord d'attaque de l'ailette et du bord de fuite de l'ailette, la coordonnée axiale étant supérieure ou égale à une différence d'une position axiale du bord d'attaque de la première pale et d'un dixième de la corde de pale, et inférieure ou égale à une somme de la position axiale du bord d'attaque de la première pale et d'une moitié de la corde de pale ;

L'invention porte également sur une turbomachine comprenant une pièce statorique telle qu'on vient de la présenter et sur un aéronef comprenant une telle turbomachine.

### DESCRIPTION DES FIGURES

D'autres caractéristiques et avantages de l'invention ressortiront encore de la description qui suit, laquelle est purement illustrative et non limitative, et doit être lue en regard des dessins annexés sur lesquels :
- la figure 1 est une représentation schématique d'une turbomachine ;
- la figure 2 est une représentation schématique d'une pièce statorique selon un premier mode de réalisation ;
- les figures 3 et 4 sont des vues schématiques en section dans un plan perpendiculaire à un axe radiale de la turbomachine d'une pièce statorique selon le premier mode de réalisation.

### DESCRIPTION DETAILLEE DE L'INVENTION

### Turbomachine

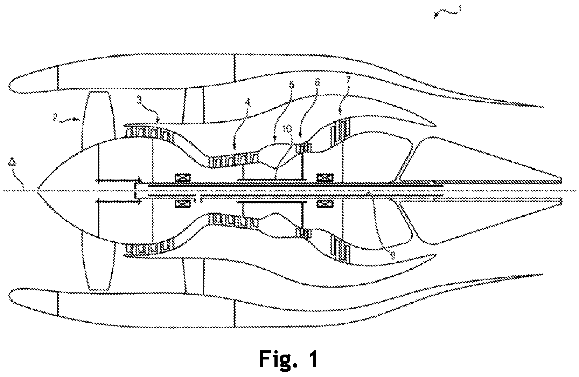

En référence à la figure 1, une turbomachine est représentée de manière schématique, plus spécifiquement un turboréacteur axial 1 à double flux. Le turboréacteur 1 illustré s'étend selon un axe Δ et comporte successivement, dans le sens d'écoulement des gaz dans la turbomachine, une soufflante 2, une section de compression pouvant comprendre un compresseur basse pression 3 et un compresseur haute pression 4, une chambre de combustion 5, et une section de turbine pouvant comprendre une turbine haute pression 6 une turbine basse pression 7 et une tuyère d'échappement.

La soufflante 2 et le compresseur basse pression 3 sont entrainés en rotation par la turbine basse pression 7 par l'intermédiaire d'un premier arbre de transmission 9, tandis que le compresseur haute pression 4 est entrainé en rotation par la turbine haute pression 6 par l'intermédiaire d'un deuxième arbre de transmission 10.

En fonctionnement, un écoulement d'air comprimé par les compresseurs basse et haute pression 3 et 4 alimente une combustion dans la chambre de combustion 5, dont l'expansion des gaz de combustion entraîne les turbines haute et basse pression 6, 7. L'air propulsé par la soufflante 2 et les gaz de combustion sortant du turboréacteur 1 à travers une tuyère d'échappement en aval des turbines 6, 7 exercent une poussée de réaction sur le turboréacteur 1 et, à travers lui, sur un véhicule ou engin tel qu'un aéronef (non illustré).

### Pièce statorique

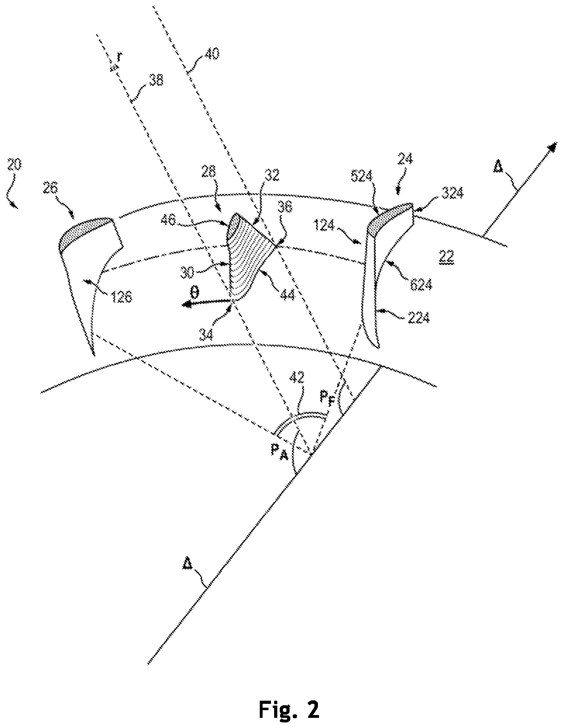

En aval de la soufflante ou d'un étage de compression, la turbomachine peut comprendre un étage d'aubes de redressement. Un tel étage d'aubes de redressement peut comprendre une pièce statorique 20 comme présentée en référence à la figure 2.

La pièce statorique 20, ou l'ensemble 20 de pièces statoriques si elle n'est pas monobloc, présente au moins deux pales adjacentes 24, 26 et une plateforme 22 à partir de laquelle s'étendent les pales 24, 26.

Le terme "plateforme" désigne ici tout élément de la turbomachine à partir duquel des pales 24, 26 sont aptes à être montées. La plateforme peut être en particulier un moyeu ou un carter qui entoure l'axe de la turbomachine. La plateforme peut présenter une surface cylindrique à distance radiale constante à l'axe Δ de la turbomachine. La plateforme 22 présente une paroi interne ou bien une paroi externe contre laquelle l'air circule, c'est à dire que la plateforme 22 définit une paroi d'une veine d'écoulement de gaz. Les pales 24, 26 s'étendent à partir de la plateforme 22 dans la veine soit radialement vers l'extérieur en s'éloignant de l'axe de la turbomachine Δ soit radialement vers l'intérieur en s'approchant de l'axe de la turbomachine Δ.

La figure 2 est une représentation schématique de la pièce statorique 20 en perspective. L'axe Δ de la turbomachine y est représenté orienté de manière positive dans le sens des écoulements des gaz dans la turbomachine. La figure 2 représente également un axe radial r et un axe circonférentiel θ passant par un point 34 de la plateforme 22. En chaque point de l'espace et par exemple en un point 34 de la plateforme 22, on peut définir un axe radial r qui est perpendiculaire à l'axe Δ de la turbomachine et qui passe par le point et l'axe Δ de la turbomachine. L'axe radial est orienté positivement dans la direction qui s'éloigne de l'axe Δ de la turbomachine. On peut également définir un axe circonférentiel θ qui passe par le point et qui est perpendiculaire à l'axe radial r et à l'axe Δ de la turbomachine. L'axe circonférentiel est orienté positivement dans la direction qui s'éloigne de l'axe Δ de la turbomachine.

Dans l'exemple de la figure 2, les pales 24, 26 s'étendent radialement depuis la plateforme 22 en s'éloignant de l'axe de la turbomachine, mais l'invention n'est pas limitée à cette seule situation.

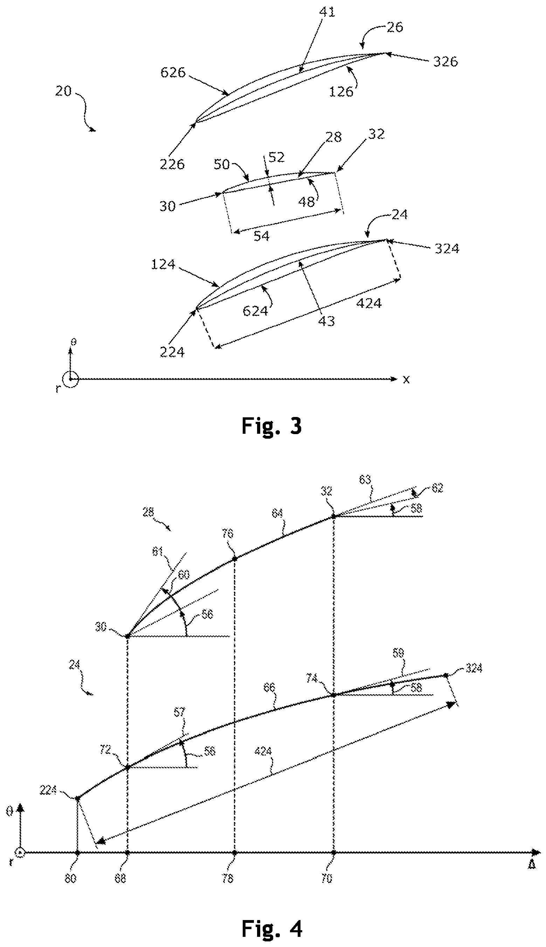

La figure 3 est une représentation schématique de la pièce statorique 20 dans un plan circonférentiel passant par la plateforme 22, plan circonférentiel qui est à une distance constante à l'axe Δ de la turbomachine. Un tel plan circonférentiel parallèle à l'axe Δ de la turbomachine permet de définir une coupe des pales 24, 26.

La direction de l'axe Δ est donnée sur la figure 3 par l'axe x dont l'orientation est le sens d'écoulement des gaz. L'axe radial r est perpendiculaire au plan de la figure 3 et dirigé vers le lecteur de la figure 3. L'axe θ correspond à la direction circonférentielle perpendiculaire simultanément à l'axe Δ et l'axe radial.

Les pales 24 et 26 présentent chacune un intrados 624, 126 et un extrados 124, 626.

Les pales 24 et 26 comprennent chacune un bord d'attaque 224, 226 côté amont et un bord de fuite 324, 326 côté aval. Les termes amont et aval sont définis en rapport avec l'écoulement général des gaz à travers la turbomachine qui s'effectue de l'amont vers l'aval dans la direction et le sens de l'axe Δ de la turbomachine.

Les pales définissent une corde de pale 424 qui est la longueur du segment reliant le bord d'attaque et le bord de fuite dans un plan circonférentiel à rayon constant ou à distance constante de l'axe Δ, plan circonférentiel qui peut être qualifié de plan de coupe.

De même dans un plan de coupe circonférentiel, chaque pale présente une ligne de cambrure 43, 41 qui est la courbe égale à la moyenne entre la courbe de l'extrados et la courbe de l'intrados. Plus précisément, la ligne de cambrure est formée de tous les points situés à égale distance de l'extrados et de l'intrados. La distance d'un point particulier à l'extrados (ou de l'intrados) est définie ici comme la distance minimale entre le point particulier et un point de l'extrados (ou de l'intrados).

### Ailette

La pièce statorique 20 comprend également une ailette 28 qui s'étend à partir de la plateforme 22 dans la même direction et le même sens d'extension que les pales 24, 26. L'ailette 28 s'étend dans la veine radialement par rapport à l'axe Δ de la turbomachine depuis la plateforme 22.

L'ailette 28 est située entre les pales 24 et 26. Plus précisément l'ailette 28 se trouve en regard de l'extrados 124 de la première pale 24 et de l'intrados 126 de la deuxième pale 26.

L'ailette 28 comprend un intrados 48 qui est en regard de l'extrados 124 de la première pale et un extrados 50 qui est en regard de l'intrados 126 de la deuxième pale 26.

L'ailette 28 comprend un bord d'attaque 30 et un bord de fuite 32, le bord d'attaque 30 étant situé en amont du bord de fuite 32.

Le bord d'attaque 30 comprend un point d'attaque 34 situé sur la plateforme 22. Le point d'attaque 34 correspond à l'intersection du bord d'attaque 30 et de la plateforme 22. On définit un plan radial d'attaque Pa qui passe par l'axe Δ de la turbomachine et le point d'attaque 34.

Tout plan radial comprend l'axe Δ de la turbomachine.

Le bord de fuite 32 comprend un point de fuite 36 situé sur la plateforme 22. Le point de fuite 36 correspond à l'intersection du bord de fuite 32 et de la plateforme 22. On définit un plan radial de fuite Pf qui passe par le point de fuite 36 et qui comprend l'axe Δ de la turbomachine et.

Le mode de réalisation le plus général de l'invention correspond aux deux caractéristiques suivantes.

L'ailette 28 présente une tangente au bord d'attaque 30 au point d'attaque 34 qui s'étend dans la veine depuis la plateforme 22 entre la première pale 24 et le plan radial d'attaque Pa. Autrement dit dans un plan radial orthogonal à l'axe Δ de la turbomachine et passant par le point d'attaque, la tangente au bord d'attaque en s'éloignant de la plateforme 22 du côté veine de la plateforme se rapproche de la première pale 24. Formulé de manière différente encore, le bord d'attaque 30 est incliné au point d'attaque 34 vers la première pale 24. Il est à noter que par ailleurs cette tangente au bord d'attaque peut présenter une projection non nulle selon l'axe Δ de la turbomachine.

L'ailette 28 présente une tangente au bord de fuite 32 au point de fuite 36 qui s'étend dans la veine depuis la plateforme 22 entre la deuxième pale 26 et le plan radial de fuite Pf. Autrement dit dans un plan radial orthogonal à l'axe Δ de la turbomachine et passant par le point de fuite, la tangente au bord de fuite en s'éloignant de la plateforme 22 du côté veine de la plateforme se rapproche de la deuxième pale 26. Formulé de manière différente encore, le bord de fuite 32 est incliné au point de fuite 36 vers la deuxième pale 26. Il est à noter que par ailleurs cette tangente au bord de fuite peut présenter une projection non nulle selon l'axe Δ de la turbomachine

L'inclinaison vers la première pale côté bord d'attaque permet de produire un effet de vrillage en bord d'attaque qui canalise mieux l'écoulement de passage.

L'inclinaison vers la deuxième pale côté bord de fuite permet un effet de dièdre en bord de fuite qui bloque plus efficacement l'écoulement de passage. Cela permet d'éviter que l'écoulement de passage provenant de la deuxième pale 26 remonte l'extrados de l'ailette 28 et passe au-delà de l'ailette pour rejoindre l'intrados de la première pale 24. L'ailette est donc « couchée » côté bord de fuite de sorte à présenter une paroi penchée vers l'intrados de la deuxième pale 26. C'est l'effet de dièdre positif. L'écoulement de passage est alors fortement repoussé vers l'intrados de la deuxième pale 26.

La forme d'ailette particulière présentée ici qui permet d'améliorer l'opérabilité des redresseurs de compresseur en bloquant l'écoulement de passage, ce qui limite le développement du décollement de coin. Ceci a pour effet de limiter les pertes et le blocage associé au phénomène de décollement de coin, ce qui améliore la stabilité du redresseur, notamment quand celui-ci est soumis à de forte incidences. La spécificité des ailettes obtenues repose sur la canalisation de l'écoulement de passage, ainsi que sur un effet de dièdre positif qui améliore la manière dont l'écoulement de passage est repoussé.

Il est à noter que l'ailette peut présenter un bord d'attaque 30 qui est droit et donc confondu avec la tangente au bord d'attaque 30 au point d'attaque 34.

Il est à noter que l'ailette peut présenter un bord de fuite 32 qui est droit et donc confondu avec la tangente au bord de fuite 32 au point de fuite 36.

### Hauteur d'ailette

La plateforme 22 telle que décrite jusqu'à présente définit une paroi radiale intérieure ou respectivement radiale extérieure de la veine d'écoulement de gaz.

Lorsque la pièce statorique 20 correspond à une architecture carénée, elle comprend une deuxième plateforme située radialement en regard de la première plateforme 22, cette deuxième plateforme définissant la paroi radiale extérieure ou respectivement radiale intérieure de la veine d'écoulement des gaz. La veine d'écoulement des gaz passe alors radialement entre la première plateforme 22 et la deuxième plateforme, la veine s'étendant radialement sur une certaine hauteur de veine.

Lorsque la pièce statorique 20 correspond à une architecture non carénée, elle ne comprend qu'une seule plateforme 22 définissant la paroi radiale intérieure de la veine d'écoulement des gaz. La veine s'étend radialement sur une certaine hauteur de veine définie par la hauteur des pales de la pièce statorique 20, pales qui font saillie radialement à partir de la plateforme 20 vers l'extérieur.

L'ailette 28 s'étend radialement sur une hauteur d'ailette.

Selon une première variante optionnelle du mode de réalisation le plus général, un rapport de la hauteur d'ailette sur la hauteur de veine étant supérieur ou égal à 0,01 et inférieur ou égal à 0,4.

### Distance circonférentielle ailette - première pale

La première pale 24 et la deuxième pale 26 sont séparées dans une direction circonférentielle d'un pas 42. Le pas 42 qui sépare les pales est un angle séparant une direction radiale de la première pale 24 et une direction radiale de la deuxième pale 26. Le pas est fixé par le nombre total de pales jouant le même rôle et présentant la même position axiale que les pales 24 et 26 et qui se trouvent tout autour de l'axe Δ de la turbomachine. La distance séparant la première pale 24 et la deuxième pale 26 est donnée par cet angle et le rayon à l'axe Δ auquel on souhaite évaluer cette distance.

On peut également définir un angle séparant la première pale 24 et l'ailette 28 dans la direction circonférentielle soit un angle séparant une direction radiale de la première pale 24 et une direction radiale de l'ailette 28.

Selon une deuxième variante optionnelle du mode de réalisation le plus général et de sa première variante, la séparation angulaire de la première pale 24 et de l'ailette 28 dans la direction circonférentielle est choisie inférieure ou égale à six dixièmes du pas angulaire 42.

### Profils d'ailette

Comme vu précédemment, la première pale 24 définit une corde de pale 424 entre son bord d'attaque 224 et son bord de fuite 324.

On peut modéliser ou représenter l'ailette 28 comme un empilement de profils selon une direction radiale entre un pied d'ailette 44 et une tête d'ailette 46. Le pied d'ailette 44 se trouve sur la plateforme 22 et correspond à l'intersection de l'ailette 28 et de la plateforme 22. La tête d'ailette se trouve à distance de la plateforme 22 dans la veine d'écoulement des gaz. Chaque profil d'ailette s'étend dans un plan circonférentiel parallèle à l'axe Δ de la turbomachine, comme une coupe de l'ailette réalisée dans ce plan circonférentiel à rayon constant ou distance constante de l'axe Δ, plan circonférentiel qui peut être qualifié de plan de coupe.

La figure 4 est une représentation schématique dans un plan circonférentiel de certains paramètres du profil d'ailette.

En référence aux figures 3 et 4, chaque profil d'ailette définit une corde d'ailette 54 entre le bord d'attaque 30 de l'ailette et le bord de fuite 32 de l'ailette. Plus précisément la corde d'ailette 54 est définie entre d'une part un premier point à l'intersection du bord d'attaque 30 et du plan de coupe et d'autre part un deuxième point à l'intersection du bord de fuite 32 et du plan de coupe. La corde d'ailette désigne la longueur du segment reliant le premier point et le deuxième point. La ligne de corde désigne le segment reliant le premier point et le deuxième.

Chaque profil d'ailette définit également une épaisseur maximale 52 entre l'intrados 48 de l'ailette et l'extrados 50 de l'ailette dans une direction perpendiculaire à la ligne de corde.

Chaque profil d'ailette permet de définir une ligne de cambrure 64 qui est la courbe égale à la moyenne entre la courbe de l'extrados 50 de l'ailette et la courbe de l'intrados 48 de l'ailette. Plus précisément, dans un profil donné de l'ailette la ligne de cambrure 64 est formée de tous les points situés à égale distance entre d'une part l'intersection de l'extrados 50 et du plan de coupe et d'autre part l'intersection de l'intrados 48 et du plan de coupe. La ligne de cambrure de l'ailette peut être choisie proche de la ligne de cambrure de la première pale 24.

L'ailette présente une variation continue des profils dans la direction radiale, c'est-à-dire que tous les paramètres de cambrure, corde, épaisseur varient continument du profil de pied au profil de tête.

Une troisième variante optionnelle du mode de réalisation le plus général et de ses première et deuxième variantes, comprend les trois caractéristiques suivantes :
- un rapport de la corde du profil de pied d'ailette sur la corde de pale 424 est supérieur ou égale à 0,2 et inférieur ou égal à 1,1 ;
- un rapport de l'épaisseur maximale du profil de pied sur la corde du profil de pied est inférieur ou égal à 0,05 ; et
- un rapport de l'épaisseur maximale du profil de tête sur la corde du profil de pied est inférieur ou égal à 0,05.

### Angles « métal » de l'ailette et de la première pale

Pour la première pale 24 et la deuxième pale 26, on peut définir :
- un angle métal d'attaque de pale comme l'angle entre la tangente à la ligne de cambrure au bord d'attaque de la pale et l'axe Δ de la turbomachine, l'angle étant orienté depuis l'axe Δ vers la tangente, et
- un angle métal de fuite de pale comme l'angle entre la tangente à la ligne de cambrure au bord de fuite de la pale et l'axe Δ, l'angle étant orienté depuis l'axe Δ vers la tangente.

Pour chaque profil d'ailette on peut définir, en référence à la figure 4 :
- un angle métal d'attaque d'ailette comme l'angle entre la tangente 61 à la ligne de cambrure au bord d'attaque de l'ailette et l'axe Δ de la turbomachine, l'angle étant orienté depuis l'axe Δ vers la tangente 61, et
- un angle métal de fuite d'ailette comme l'angle entre la tangente 63 à la ligne de cambrure au bord de fuite de l'ailette et l'axe Δ, l'angle étant orienté depuis l'axe Δ vers la tangente 63.

Dans le cas particulier des ailettes décrites dans cette invention, on peut choisir d'estimer les angles métaux en fonction de l'angle de cambrure local de la pale 24 ou 26.

Pour cela, et en rapport avec la figure 4, on peut associer à chaque point de chaque ligne de cambrure 64 de chaque profil d'ailette une position axiale et une position radiale. Le point d'ailette est associé à un point référence d'une ligne de cambrure 66 d'un profil de la première pale 24, le point de référence présentant la position axiale et la position radiale du point d'ailette.

Ce point d'ailette peut par exemple se trouver en bord d'attaque 30 à la position axiale 68 : le point référence associé est référencé 72 en figure 4.

Ce point d'ailette peut par exemple se trouver en bord de fuite 32 à la position axiale 70 : le point référence associé est référencé 74 en figure 4.

On peut associer à l'angle métal d'attaque d'ailette l'angle de cambrure local 56 qui est l'angle orienté depuis l'axe Δ à la tangente 57 à la ligne de cambrure 66 du profil de la première pale 24 au point référence associé 72. On peut choisir de décrire l'angle métal d'attaque d'ailette en référence à cet angle de cambrure local comme la différence 60 entre cet angle métal et cet angle de cambrure local 56.

On peut associer à l'angle métal de fuite d'ailette l'angle de cambrure local 58 qui est l'angle orienté depuis l'axe Δ à la tangente 59 à la ligne de cambrure 66 du profil de la première pale 24 au point référence associé 74. On peut choisir de décrire l'angle métal de fuite d'ailette en référence à cet angle de cambrure local comme la différence 62 entre cet angle métal et cet angle de cambrure local 58.

D'une manière générale, les ailettes décrites dans cette invention présentent en bord d'attaque et en bord de fuite du profil de tête ainsi qu'en bord de fuite du profil de pied des angles métaux proches de l'angle de cambrure local. Plus précisément :
- l'angle 60 formé par une première tangente 61 à la ligne de cambrure 64 du profil de tête d'ailette au bord d'attaque 30 et par une deuxième tangente 57 à la ligne de cambrure 66 du profil de la première pale au point référence 72 associé au bord d'attaque du profil de tête d'ailette est inférieur ou égal en valeur absolue à 10 degrés ;
- l'angle 62 formé par une troisième tangente 63 à la ligne de cambrure 64 du profil de tête d'ailette au bord fuite 32 et une quatrième tangente 59 à la ligne de cambrure 66 du profil de la première pale au point référence 74 associé au bord de fuite du profil de tête d'ailette est inférieur ou égale en valeur absolue à 10 degrés ; et
- l'angle formé par une cinquième tangente à la ligne de cambrure du profil de pied d'ailette au point de fuite 36 et une sixième tangente à la ligne de cambrure du profil de la première pale au point référence associé au point de fuite 36 est inférieur ou égale en valeur absolue à 10 degrés.

Le profil de tête et le profil de pied présentent alors un angle métallique au bord de fuite dont la valeur est proche de la cambrure locale des pales. De cette manière l'ailette guide l'écoulement en bord de fuite comme les pales.

### Position axiale de l'ailette par rapport à la première pale

Pour caractériser la position de l'ailette dans la direction de l'axe Δ de la turbomachine, on utilise en référence à la figure 4 une coordonnée axiale 78 d'un point à mi-corde 76 d'un profil d'ailette.

Le point à mi-corde 76 est situé à égale distance du bord d'attaque 30 de l'ailette et du bord de fuite 32 de l'ailette.

En particulier on peut utiliser le point à mi-corde du profil de tête de l'ailette.

Le profil de pied de l'ailette est quant à lui positionné axialement par rapport au profil de tête grâce à la loi d'empilement de l'ailette qui donne le positionnement relatif du profil de tête d'ailette par rapport au profil de pied d'ailette.

Pour ce positionnement relatif, il est choisi comme référence de positionnement de chaque profil de l'empilement le point à mi-corde. Deux axes sont définis :
- un premier axe « t » dirigé selon la direction de la corde du profil de pied et orienté dans le même sens que l'axe Δ de la turbomachine d'amont en aval ;
- un deuxième axe « n » perpendiculaire au premier axe « t » et orienté dans le même sens que l'axe circonférentiel θ de la première pale 24 vers la deuxième pale 26.

Deux angles sont définis :
- un angle de flèche (également connu sous le terme anglais « sweep ») qui est l'angle entre l'axe « t », et une direction définie par le point à mi-corde du profil de pied et le point à mi-corde du profil de tête ;
- un angle de dièdre (également connu sous le terme anglais « lean ») qui est l'angle entre l'axe « n », et la direction définie par le point à mi-corde du profil de pied et le point à mi-corde du profil de tête.

Dans le cas particulier des ailettes décrites ici, les angles de flèche et de dièdre tels que l'on vient de les définir prennent des valeurs supérieures ou égales à - 10 degrés et inférieures ou égales à + 10 degrés. Ces angles sont suffisamment faibles pour que l'on considère la position axiale de l'ailette bien décrite par une coordonnée axiale 78 d'un point à mi-corde 76 d'un profil d'ailette.

### Mode de réalisation « long fence » (soit « longue clôture » en français)

Un deuxième mode de réalisation de l'invention qui est un cas particulier du mode de réalisation le plus général et de ses variantes comprend les caractéristiques suivantes :
- un rapport de la corde du profil de pied d'ailette sur la corde de pale 424 supérieur ou égal à 0,2 et inférieur ou égal à 1,1 ;
- une différence entre l'angle métal d'attaque d'ailette sur le profil de pied d'ailette et l'angle de cambrure local du profil de pied de la première pale est supérieure ou égale - 50 degrés et inférieure ou égale à + 10 degrés ;
- une coordonnée axiale 78 d'un point à mi-corde 76 d'un profil d'ailette, le point à mi-corde 76 étant situé à égale distance du bord d'attaque 30 de l'ailette et du bord de fuite 32 de l'ailette, la coordonnée axiale 78 étant supérieure ou égale à une position axiale 80 du bord d'attaque 224 de la première pale et inférieure ou égale à une somme de la position axiale du bord d'attaque de la première pale et de la corde de pale 424.

Concernant l'angle métal d'attaque d'ailette sur le profil de pied d'ailette, et comme évoqué précédemment, celui-ci est un premier angle orienté défini depuis l'axe Δ à une première tangente à la ligne de cambrure du profil de pied d'ailette au point d'attaque 34 du bord d'attaque 30. L'angle de cambrure local du profil de pied de la première pale est un deuxième angle orienté défini depuis l'axe Δ à une deuxième tangente à la ligne de cambrure du profil de pied de la première pale à un point référence présentant une position axiale du point d'attaque 34.

Dans ce deuxième mode de réalisation, les ailettes sont relativement longues ce qui permet de produire un effet physique de confinement de l'écoulement de passage entre l'extrados 50 de l'ailette 28 et l'intrados 126 de la deuxième pale 26.

L'écoulement proche paroi est fortement vrillé, c'est-à-dire que l'écoulement présente un gradient important à mesure que l'on s'éloigne de la plateforme. En effet proche de la plateforme et plus loin de la plateforme, les gaz ne s'écoulement pas de manière identique. Proche de la plateforme c'est l'écoulement de passage qui domine de sorte que le fluide s'écoule principalement dans le sens de l'intrados de la deuxième pale 26 vers l'extrados de la première pale 24, cet écoulement de passage est en outre lent, c'est à dire qu'il correspond à une faible quantité de mouvement. Plus loin de la plateforme l'écoulement s'effectue principalement de l'amont vers l'aval en étant guidé par les pales, cet écoulement étant plus rapide.

L'ailette dans ce deuxième mode présente un bord d'attaque de l'ailette avec un vrillage métallique. Ainsi, l'angle métal du profil de pied de l'ailette peut être choisi inférieur à l'angle métal en tête d'ailette pour être adapté à l'écoulement des gaz lent proche plateforme, et l'angle métal du profil de tête de l'ailette peut être adapté à l'écoulement en tête, dans la région d'écoulement sain.

### Mode de réalisation « upstream sharp » (soit « amont aigu » en français)

Un troisième mode de réalisation de l'invention qui est un cas particulier du mode de réalisation le plus général et de ses variantes comprend les caractéristiques suivantes :
- un rapport de la corde du profil de pied d'ailette sur la corde de pale 424 supérieur ou égal à 0,1 et inférieur ou égal à 0,4 ;
- une différence entre l'angle métal d'attaque d'ailette sur le profil de pied d'ailette et l'angle de cambrure local du profil de pied de la première pale est inférieure ou égale en valeur absolue à + 10 degrés ;
- une coordonnée axiale 78 d'un point à mi-corde 76 d'un profil d'ailette, le point à mi-corde 76 étant situé à égale distance du bord d'attaque 30 de l'ailette et du bord de fuite 32 de l'ailette, la coordonnée axiale 78 étant supérieure ou égale à une différence d'une position axiale 80 du bord d'attaque 224 de la première pale 24 et d'un dixième de la corde de pale 424, et inférieure ou égale à une somme de la position axiale du bord d'attaque 80 de la première pale 24 et d'une moitié de la corde de pale 424.

Concernant l'angle métal d'attaque d'ailette sur le profil de pied d'ailette, et comme évoqué précédemment, celui-ci est un premier angle orienté défini depuis l'axe Δ à une première tangente à la ligne de cambrure du profil de pied d'ailette au point d'attaque 34 du bord d'attaque 30. L'angle de cambrure local du profil de pied de la première pale est un deuxième angle orienté défini depuis l'axe Δ à une deuxième tangente à la ligne de cambrure du profil de pied de la première pale à un point référence présentant une position axiale du point d'attaque 34.

Dans ce troisième mode de réalisation, les ailettes sont relativement courtes et placées sur la partie amont d'un canal inter aubes défini entre les pales. Cela qui permet de produire un tourbillon en tête d'ailette 28 apte à énergiser l'écoulement proche plateforme 22. Cela permet de redresser l'écoulement de passage, et limite in fine le décollement de coin.

Il est à noter qu'un plus fort angle métal d'attaque peut également rendre le tourbillon plus intense et favoriser le mélange et accélérer l'écoulement sur l'extrados de l'ailette. Le tourbillon mélangera alors l'écoulement sain et l'écoulement accéléré à la couche limite du moyeu.

## Revendications

1. Pièce statorique (20) d'une turbomachine comprenant :
- une plateforme (22) définissant une paroi d'une veine d'écoulement de gaz,
- une première pale (24),
- une deuxième pale (26), et
- une ailette (28) comprenant un bord d'attaque (30) et un bord de fuite (32),
l'ailette (28) s'étendant dans la veine, radialement par rapport à un axe (Δ) de la turbomachine, depuis la plateforme (22), en regard d'un extrados (124) de la première pale et d'un intrados (126) de la deuxième pale (26),
le bord d'attaque (30) comprenant un point d'attaque (34) situé sur la plateforme (22), une tangente au bord d'attaque (30) au point d'attaque (34) s'étendant dans la veine depuis la plateforme (22) entre la première pale (24) et un plan radial d'attaque (Pa) passant par l'axe (Δ) et le point d'attaque (34),
le bord de fuite (32) comprenant un point de fuite (36) situé sur la plateforme (22), une tangente au bord de fuite (32) au point de fuite (36) s'étendant dans la veine depuis la plateforme (22) entre la deuxième pale (26) et un plan radial de fuite (Pf) passant par l'axe (Δ) et le point de fuite (36).

2. Pièce statorique selon la revendication 1 dans laquelle la plateforme (22) est une première plateforme, la pièce comprenant une deuxième plateforme de sorte à définir la veine d'écoulement entre la première plateforme (22) et la deuxième plateforme, la veine s'étendant radialement sur une hauteur de veine, l'ailette (28) s'étendant radialement sur une hauteur d'ailette, un rapport de la hauteur d'ailette sur la hauteur de veine étant supérieur ou égal à 0,01 et inférieur ou égal à 0,4.

3. Pièce statorique selon la revendication 1 ou 2 dans laquelle la première pale (24) et la deuxième pale (26) sont séparées angulairement dans une direction circonférentielle d'un pas angulaire (42), une séparation angulaire de la première pale (24) et de l'ailette (28) dans la direction circonférentielle étant inférieure ou égale à six dixièmes du pas angulaire (42).

4. Pièce statorique selon l'une des revendications précédentes, dans laquelle la première pale (24) comprend un bord d'attaque (224) et un bord de fuite (324) séparés d'une corde de pale (424), l'ailette (28) comprenant une pluralité de profils empilés selon une direction radiale entre un pied d'ailette (44) situé sur la plateforme (22) et une tête d'ailette (46), chaque profil définissant une corde (54) entre le bord d'attaque (30) de l'ailette (28) et le bord de fuite (32) de l'ailette (28) et une épaisseur maximale (52) du profil entre un intrados (48) de l'ailette et un extrados (50) de l'ailette dans une direction perpendiculaire à une ligne de corde,
un rapport d'une différence entre la corde du profil de tête et la corde du profil de pied sur la corde de pale étant inférieur ou égal en valeur absolue à 0,05 ;
un rapport de l'épaisseur maximale du profil de pied sur la corde du profil de pied est inférieur ou égal à 0,05 ; et
un rapport de l'épaisseur maximale du profil de tête sur la corde du profil de pied est inférieur ou égal à 0,05.

5. Pièce statorique selon l'une des revendications précédentes, dans laquelle la première pale (24) comprend un bord d'attaque (224) et un bord de fuite (324) séparés d'une corde de pale (424),
l'ailette (28) comprenant une pluralité de profils empilés selon une direction radiale entre un pied d'ailette (44) et une tête d'ailette (46), chaque profil définissant une corde d'ailette (54) entre le bord d'attaque (30) et le bord de fuite (32), un rapport de la corde du profil de pied d'ailette sur la corde de pale (424) étant supérieur ou égale à 0,2 et inférieur ou égal à 1,1 ;
un premier angle orienté étant défini depuis l'axe (Δ) à une première tangente à la ligne de cambrure du profil de pied d'ailette au point d'attaque (34),
un deuxième angle orienté étant défini depuis l'axe (Δ) à une deuxième tangente à la ligne de cambrure du profil de pied de la première pale à un point référence de la ligne de cambrure du profil de pied de la première pale, le point référence présentant une position axiale du point d'attaque (34),
une différence entre le premier angle orienté et le deuxième angle orienté étant supérieure ou égale - 50 degrés et inférieure ou égale à + 10 degrés, l'ailette (28) définissant une coordonnée axiale (78) d'un point à mi-corde (76) d'un profil d'ailette, le point à mi-corde (76) étant situé à égale distance du bord d'attaque (30) de l'ailette et du bord de fuite (32) de l'ailette, la coordonnée axiale (78) étant supérieure ou égale à une position axiale (80) du bord d'attaque (224) de la première pale et inférieure ou égale à une somme de la position axiale du bord d'attaque de la première pale et de la corde de pale (424).

6. Pièce statorique selon l'une des revendications précédentes, dans laquelle la première pale (24) comprend un bord d'attaque (224) et un bord de fuite (324) séparés d'une corde de pale (424),
l'ailette (28) comprenant une pluralité de profils empilés selon une direction radiale entre un pied d'ailette (44) et une tête d'ailette (46), chaque profil définissant une ligne de cambrure (64) et une corde (54) entre le bord d'attaque (30) de l'ailette (28) et le bord de fuite (32) de l'ailette (28), un rapport de la corde du profil de pied d'ailette sur la corde de pale (424) étant supérieur ou égale à 0,1 et inférieur ou égal à 0,4,
un angle entre une première tangente à la ligne de cambrure du profil de pied d'ailette au point d'attaque (34) et une deuxième tangente à la ligne de cambrure du profil de pied de la première pale à un point référence de la ligne de cambrure du profil de pied de la première pale, le point référence présentant une position axiale du point d'attaque (34), étant inférieur ou égale en valeur absolue à 10 degrés,
l'ailette (28) définissant une coordonnée axiale (78) d'un point à mi-corde (76) d'un profil d'ailette, le point à mi-corde (76) étant situé à égale distance du bord d'attaque (30) de l'ailette et du bord de fuite (32) de l'ailette, la coordonnée axiale (78) étant supérieure ou égale à une différence d'une position axiale (80) du bord d'attaque (224) de la première pale et d'un dixième de la corde de pale (424), et inférieure ou égale à une somme de la position axiale du bord d'attaque (80) de la première pale et d'une moitié de la corde de pale (424).

7. Turbomachine comprenant une pièce statorique (20) selon l'une des revendications 1 à 6.

8. Aéronef comprenant une turbomachine selon la revendication 7.

## Patentansprüche

1. Statorteil (20) einer Turbomaschine, umfassend:
- eine Plattform (22), die eine Wand eines Gasströmungskanals definiert,
- ein erstes Blatt (24),
- ein zweites Blatt (26), und
- eine Rippe (28), die eine Vorderkante (30) und einer Hinterkante (32) umfasst,
wobei sich die Rippe (28) in dem Kanal radial zu einer Achse (Δ) der Turbomaschine von der Plattform (22) aus einer Oberseite (124) des ersten Blatts und einer Unterseite (126) des zweiten Blatts (26) zugewandt erstreckt,
wobei die Vorderkante (30) einen Anströmpunkt (34) umfasst, der sich auf der Plattform (22) befindet, wobei sich eine Tangente an der Vorderkante (30) am Anströmpunkt (34) im Kanal von der Plattform (22) aus zwischen dem ersten Blatt (24) und einer radialen Anströmebene (Pa) durch die Achse (Δ) und den Anströmpunkt (34) erstreckt,
wobei die Hinterkante (32) einen Abströmpunkt (36) umfasst, der sich auf der Plattform (22) befindet, wobei sich eine Tangente an der Hinterkante (32) am Abströmpunkt (36) im Kanal von der Plattform (22) aus zwischen dem zweiten Blatt (26) und einer radialen Abströmebene (Pf) durch die Achse (Δ) und den Abströmpunkt (36) erstreckt.

2. Statorteil nach Anspruch 1, wobei die Plattform (22) eine erste Plattform ist, wobei das Teil eine zweite Plattform umfasst, so dass der Strömungskanal zwischen der ersten Plattform (22) und der zweiten Plattform definiert wird, wobei sich der Kanal radial über eine Kanalhöhe erstreckt, wobei sich die Rippe (28) radial über eine Rippenhöhe erstreckt, wobei ein Verhältnis der Rippenhöhe zur Kanalhöhe größer oder gleich 0,01 und kleiner oder gleich 0,4 ist.

3. Statorteil nach Anspruch 1 oder 2, wobei das erste Blatt (24) und das zweite Blatt (26) in einer Umfangsrichtung um einem Teilungswinkel (42) winklig voneinander beabstandet sind, wobei eine Winkeltrennung des ersten Blatts (24) und der Rippe (28) in der Umfangsrichtung kleiner oder gleich sechs Zehntel des Teilungswinkels (42) ist.

4. Statorteil nach einem der vorstehenden Ansprüche, wobei das erste Blatt (24) eine Vorderkante (224) und eine Hinterkante (324) umfasst, die von einer Blattsehne (424) getrennt sind, wobei die Rippe (28) eine Vielzahl von Profilen umfasst, die in einer radialen Richtung zwischen einem Rippenfuß (44) auf der Plattform (22) und einem Rippenkopf (46) gestapelt sind, wobei jedes Profil eine Sehne (54) zwischen der Vorderkante (30) der Rippe (28) und der Hinterkante (32) der Rippe (28) und eine maximale Dicke (52) des Profils zwischen einer Unterseite (48) der Rippe und einer Oberseite (50) der Rippe in einer Richtung senkrecht zu einer Sehnenlinie definiert,
wobei ein Verhältnis einer Differenz zwischen der Sehne des Rippenkopfs und der Sehne des Fußprofils zur Blattsehne kleiner oder gleich 0,05 in Absolutwert ist;
ein Verhältnis der maximalen Dicke des Fußprofils zur Sehne des Fußprofils kleiner oder gleich 0,05 ist; und
ein Verhältnis der maximalen Dicke des Rippenkopfs zur Sehne des Fußprofils kleiner oder gleich 0,05 ist.

5. Statorteil nach einem der vorstehenden Ansprüche, wobei das erste Blatt (24) eine Vorderkante (224) und eine Hinterkante (324) aufweist, die von einer Blattsehne (424) getrennt sind,
wobei die Rippe (28) eine Vielzahl von Profilen umfasst, die in radialer Richtung zwischen einem Rippenfuß (44) und einem Rippenkopf (46) gestapelt sind, wobei jedes Profil eine Rippensehne (54) zwischen der Vorderkante (30) und der Hinterkante (32) definiert, wobei ein Verhältnis der Sehne des Rippenfußprofils zur Blattsehne (424) größer oder gleich 0,2 und kleiner oder gleich 1,1 ist;
wobei ein erster orientierter Winkel von der Achse (Δ) zu einer ersten Tangente an der Wölbungslinie des Rippenfußprofils am Anströmpunkt (34) definiert ist,
wobei ein zweiter orientierter Winkel von der Achse (Δ) zu einer zweiten Tangente an der Wölbungslinie des Fußprofils des ersten Blatts an einem Referenzpunkt der Wölbungslinie des Fußprofils des ersten Blatts definiert ist, wobei der Referenzpunkt eine axiale Position des Anströmpunkts (34) aufweist,
wobei eine Differenz zwischen dem ersten orientierten Winkel und dem zweiten orientierten Winkel größer oder gleich -50 Grad und kleiner oder gleich +10 Grad ist,
wobei die Rippe (28) eine axiale Koordinate (78) eines Punkts auf halber Sehne (76) eines Rippenprofils definiert, wobei sich der Punkt auf halber Sehne (76) in gleichem Abstand von der Vorderkante (30) der Rippe und der Hinterkante (32) der Rippe befindet, wobei die axiale Koordinate (78) größer oder gleich einer axialen Position (80) der Vorderkante (224) des ersten Blatts und kleiner oder gleich einer Summe aus der axialen Position der Vorderkante des ersten Blatts und der Blattsehne (424) ist.

6. Statorteil nach einem der vorstehenden Ansprüche, wobei das erste Blatt (24) eine Vorderkante (224) und eine Hinterkante (324) aufweist, die von einer Blattsehne (424) getrennt sind,
wobei die Rippe (28) eine Vielzahl von Profilen umfasst, die in radialer Richtung zwischen einem Rippenfuß (44) und einem Rippenkopf (46) gestapelt sind, wobei jedes Profil eine Wölbungslinie (64) und eine Sehne (54) zwischen der Vorderkante (30) der Rippe (28) und der Hinterkante (32) der Rippe (28) definiert, wobei ein Verhältnis der Sehne des Rippenfußprofils zur Rippensehne (424) größer oder gleich 0,1 und kleiner oder gleich 0,4 ist,
wobei ein Winkel zwischen einer ersten Tangente an der Wölbungslinie des Rippenfußprofils am Anströmpunkt (34) und einer zweiten Tangente an der Wölbungslinie des Fußprofils des ersten Blatts an einem Referenzpunkt der Wölbungslinie des Fußprofils des ersten Blatts, wobei der Referenzpunkt eine axiale Position des Anströmpunkts (34) aufweist, kleiner oder gleich 10 Grad in Absolutwert ist,
wobei die Rippe (28) eine axiale Koordinate (78) eines Punkts auf halber Sehne (76) eines Rippenprofils definiert, wobei sich der Punkt auf halber Sehne (76) in gleichem Abstand von der Vorderkante (30) der Rippe und der Hinterkante (32) der Rippe befindet, wobei die axiale Koordinate (78) größer oder gleich einer Differenz einer axialen Position (80) der Vorderkante (224) des ersten Blatts und einem Zehntel der Blattsehne (424) und kleiner oder gleich einer Summe aus der axialen Position der Vorderkante (80) des ersten Blatts und einer Hälfte der Blattsehne (424) ist.

7. Turbomaschine, umfassend ein Statorteil (20) nach einem der Ansprüche 1 bis 6.

8. Flugzeug, umfassend eine Turbomaschine nach Anspruch 7.

## Claims

1. A stator part (20) of a turbine engine comprising:
- a platform (22) defining a wall of a gas flow stream,
- a first blade (24)
- a second blade (26), and
- a fin (28) comprising a leading edge (30) and a trailing edge (32),
the fin (28) extending into the gas flow stream radially relative to an axis (Δ) of the turbine engine from the platform (22), facing an upper side (124) of the first blade and a lower side (126) of the second blade (26),
the leading edge (30) comprising a leading point (34) located on the platform (22), a tangent to the leading edge (30) at the leading point (34) extending into the gas flow stream from the platform (22) between the first blade (24) and a radial leading plane (Pa) passing through the axis (Δ) and the leading point (34),
the trailing edge (32) comprising a trailing point (36) located on the platform (22), a tangent to the trailing edge (32) at the trailing point (36) extending into the gas flow stream from the platform (22) between the second blade (26) and a radial trailing plane (Pf) passing through the axis (Δ) and the trailing point (36).

2. The stator part according to claim 1, wherein the platform (22) is a first platform, the part comprising a second platform so as to define the gas flow stream between the first platform (22) and the second platform, the gas flow stream extending radially over a stream height, the fin (28) extending radially over a fin height, a ratio of the fin height to the stream height being greater than or equal to 0.01 and less than or equal to 0.4.

3. The stator part according to claim 1 or 2, wherein the first blade (24) and the second blade (26) are angularly separated in a circumferential direction by an angular pitch (42), an angular separation of the first blade (24) and the fin (28) in the circumferential direction being less than or equal to six-tenths of the angular pitch (42).

4. The stator part according to one of the preceding claims, wherein the first blade (24) comprises a leading edge (224) and a trailing edge (324) separated by a blade chord (424), the fin (28) comprising a plurality of profiles stacked in a radial direction between a fin root (44) located on the platform (22) and a fin tip (46), each profile defining a chord (54) between the leading edge (30) of the fin (28) and the trailing edge (32) of the fin (28), and a maximum thickness (52) of the profile between a lower side (48) of the fin and an upper side (50) of the fin in a direction perpendicular to a chord line,
a ratio of a difference between the tip profile chord and the root profile chord to the blade chord being less than or equal in absolute value to 0.05; a ratio of the maximum thickness of the root profile to the root profile chord is less than or equal to 0.05; and
a ratio of the maximum thickness of the tip profile to the root profile chord less than or equal to 0.05.

5. The stator part according to one of the preceding claims, wherein the first blade (24) comprises a leading edge (224) and a trailing edge (324) separated by a blade chord (424),
the fin (28) comprising a plurality of profiles stacked in a radial direction between a fin root (44) and a fin tip (46), each profile defining a fin chord (54) between the leading edge (30) and the trailing edge (32), a ratio of the fin root profile chord to the blade chord (424) being greater than or equal to 0.2 and less than or equal to 1.1;
a first oriented angle being defined from the axis (Δ) to a first tangent to the camber line of the fin root profile at the leading point (34),
a second oriented angle being defined from the axis (Δ) to a second tangent to the camber line of the root profile of the first blade at a reference point of the camber line of the root profile of the first blade, the reference point having an axial position of the leading point (34),
a difference between the first oriented angle and the second oriented angle being greater than or equal to -50 degrees and less than or equal to +10 degrees,
the fin (28) defining an axial coordinate (78) of a mid-chord point (76) of a fin profile, the mid-chord point (76) being located at equal distance from the leading edge (30) of the fin and from the trailing edge (32) of the fin, the axial coordinate (78) being greater than or equal to an axial position (80) of the leading edge (224) of the first blade and less than or equal to a sum of the axial position of the leading edge of the first blade and of the blade chord (424).

6. The stator part according to one of the preceding claims, wherein the first blade (24) comprises a leading edge (224) and a trailing edge (324) separated by a blade chord (424),
the fin (28) comprising a plurality of profile stacked in a radial direction between a fin root (44) and fin tip (46), each profile defining a camber line (64) and a chord (54) between the leading edge (30) of the fin (28) and the trailing edge (32) of the fin (28), a ratio of the fin root profile chord to the blade chord (424) being greater than or equal to 0.1 and less than or equal to 0.4,
an angle between a first tangent to the camber line of the fin root profile at the leading point (34) and a second tangent to the camber line of the root profile of the first blade at a reference point of the camber line of the root profile of the first blade, the reference point having an axial position of the leading point (34), being less than or equal in absolute value to 10 degrees,
the fin (28) defining an axial coordinate (78) of a mid-chord point (76) of a fin profile, the mid-chord point (76) being located at equal distance from the leading edge (30) of the fin and from the trailing edge (32) of the fin, the axial coordinate (78) being greater than or equal to a difference of an axial position (80) of the leading edge (224) of the first blade and one-tenth of the blade chord (424), and less than or equal to a sum of the axial position of the leading edge (80) of the first blade and half the blade chord (424).

7. A turbine engine comprising a stator part (20) according to one of claims 1 to 6.

8. An aircraft comprising a turbine engine according to claim 7.
